# EUROPÄISCHE PATENTSCHRIFT

(11) **EP 2 794 110 B1**
(45) Veröffentlichungstag und Bekanntmachung des Hinweises auf die Patenterteilung: **15.05.2019**
(21) Anmeldenummer: 12815637.9
(22) Anmeldetag: 18.12.2012
(51) Int. Cl.: B02C 18/14, B02C 18/16, B02C 18/22

(54) **GRANULATOR**
GRANULATOR
GRANULATEUR

(30) Priorität: 21.12.2011 DE 102011121972
(43) Veröffentlichungstag der Anmeldung: 29.10.2014
(73) Patentinhaber: Thermo Electron (Karlsruhe) GmbH, 76227 Karlsruhe (DE)
(72) Erfinder: STOCKMANN, Erich, 71665 Vahingen an der Enz (DE); GEISSLER, Thobias, 76646 Bruchsal (DE)
(74) Vertreter: Lichti - Patentanwälte Partnerschaft mbB
(86) Internationale Anmeldenummer: PCT/EP2012/005221
(87) Internationale Veröffentlichungsnummer: WO 2013/091827

(56) Entgegenhaltungen:
- DE-U1-202010 000 512
- GB-A- 703 956
- US-A- 5 048 764
- US-A- 5 996 457
- US-B2- 7 270 285

## Beschreibung

Die Erfindung betrifft einen Granulator mit einer von einer Antriebsvorrichtung angetriebenen Schneidvorrichtung, wobei die Antriebsvorrichtung in einem Granulatorgehäuse aufgenommen und die Schneidvorrichtung in einem Modulgehäuse aufgenommen ist, das in lösbarer Weise mit dem Granulatorgehäuse verbunden und von diesem abnehmbar ist, und wobei die Schneidvorrichtung über eine lösbare Kupplung mit der Antriebsvorrichtung verbunden ist.

Eine derartige Vorrichtung ist aus der US 5 996 457 A bekannt.

Ein Granulator dient dazu, einen Materialstrang, der beispielsweise aus extrudiertem Kunststoff bestehen kann, in kleine Teile zu zerschneiden, da das Material auf diese Weise besser transportiert und gelagert werden kann. Bei dem Materialstrang kann es sich um einen sogenannten endlosen Strang handeln, wenn der direkt aus einem Extruder austretende Strang dem Granulator zugeführt wird. Unter dem Begriff "Materialstrang" sollen jedoch auch strangähnliche Abschnitte eines endlosen Materialstrangs sowie stangenförmige Materialstücke verstanden werden.

In dem Granulator wird der Materialstrang an seinem vorderen Ende mittels der Schneidvorrichtung, bei der es sich um ein rotierendes oder um ein alternierend hin und her bewegbares Messer handeln kann, in kleine Stücke geschnitten, die üblicherweise direkt nach unten in einen Aufnahmebehälter fallen und in diesem gesammelt werden. Die Schneidvorrichtung ist über eine Antriebswelle mit einer Antriebsvorrichtung verbunden, die in dem Granluatorgehäuse sitzt.

Um ein Granulat gewünschter Größe zu erhalten, muss der Materialstrang mit definierter Geschwindigkeit der Schneidvorrichtung zugeführt werden. Zu diesem Zweck ist üblicherweise in dem Granulator eine Fördervorrichtung vorgesehen, die ein drehangetriebenes Antriebsrad und eine Druckrolle aufweist, zwischen denen ein Materialstrang hindurchgeführt ist. Das Antriebsrad steht über eine Welle mit einer Antriebsvorrichtung in Verbindung, die ebenfalls innerhalb des Granulatorgehäuses angeordnet ist.

Aus der US 7,270,285 B2 ist ein Granulator bekannt, der eine von einer Antriebsvorrichtung angetriebene Schneidvorrichtung in Form eines rotierenden Messerrades aufweist, wobei die Antriebsvorrichtung in einem Granulatorgehäuse aufgenommen ist. Zusätzlich ist eine gehäuseartige Lagerplatte vorgesehen, die das Messerrad aufnimmt, das zwischen der Lagerplatte und dem Granulatorgehäuse angeordnet ist. Auf die Lagerplatte ist auf der dem Messerrad abgewandten Seite eine Abdeckung aufsetzbar.

Ein Granulator findet auch in Produktionsbereichen Anwendung, in denen sehr hohe hygienische Anforderungen herrschen, beispielsweise bei der Herstellung von Lebensmitteln oder Arzneimitteln. Wenn an einem Granulator ein Produktwechsel vorgenommen werden soll, d.h. wenn statt eines Materialstrangs aus einem ersten Material nun ein Materialstrang aus einem anderen zweiten Material verarbeitet werden soll, muss sichergestellt sein, dass sich in dem Granulator keine Reste des bisher verarbeiteten ersten Materials befinden, die das Granulat des zweiten Materials verunreinigen könnten. Es ist zu diesem Zweck bekannt, dass der Granulator bei einem Produktwechsel zunächst vollständig gereinigt werden muss. Wenn an die Verarbeitung der jeweiligen Materialien sehr hohe hygienische Anforderungen gestellt werden, ist es notwendig, die Schneidvorrichtung und die Fördervorrichtung vollständig auseinander zu bauen, abseits des bisherigen Einsatzortes zu reinigen und anschließend am Einsatzort wieder zusammen zu bauen. Dies führt zu sehr langen Stillstandszeiten des Granulators, was sehr unwirtschaftlich ist.

Um die Schneidvorrichtung gemäß der US 7,270,285 B2 zum Zwecke der Reinigung auseinander zu bauen, muss zunächst die Abdeckung abgenommen werden. Anschließend werden eine zentrale Motorwelle und Befestigungsschrauben gelöst, so dass die Lagerplatte, das Messerrad und das Granulatorgehäuse voneinander frei kommen. Dabei sind die Lagerplatte und das Messerrad jeweils lose, so dass die Gefahr besteht, dass diese Teile herunterfallen und die Umgebung mit Schneidrückständen verschmutzen. Darüber hinaus können an der Lageplatte oder dem Messerrad sitzende Schneidrückstände herunterfallen, was ebenfalls zu einer Verunreinigung der Umgebung führt. Desweiteren ist der Montageaufwand für den Auseinanderbau und anschließenden Zusammenbau relativ groß und somit kostenintensiv.

Der Erfindung liegt die Aufgabe zugrunde, einen Granulator der genannten Art zu schaffen, bei dem sich ein Produktwechsel schnell und in einfacher Weise erreichen lässt, ohne dass die Gefahr der Verunreinigung der Umgebung mit Schneidrückständen besteht.

Diese Aufgabe wird erfindungsgemäß durch einen Granulator mit den Merkmalen des Anspruchs 1 gelöst. Dabei ist vorgesehen, dass die Schneidvorrichtung zusammen mit dem Modulgehäuse als Einheit von dem Granulatorgehäuse abnehmbar ist.

Die Erfindung geht von dem Grundgedanken aus, die Schneidvorrichtung als eigenständige modulartige Baueinheit auszubilden, die ein separates Modulgehäuse aufweist, das an das Granulatorgehäuse anbaubar ist, wobei die Schneidvorrichtung mit ihrer Antriebsvorrichtung über die Kupplung verbunden wird. Bei einem Produktwechsel wird das Modulgehäuse zusammen mit der Schneidvorrichtung, die in dem Modulgehäuse aufgenommen ist und mit diesem eine Einheit bildet, von dem Granulatorgehäuse unter Lösen der Kupplung abgebaut und kann dann gereinigt werden. Gleichzeitig kann ein neues Modulgehäuse gleichen Aufbaus, d.h. einschließlich einer Schneidvorrichtung an das Granulatorgehäuse angebaut werden, wobei die Schneidvorrichtung über die Kupplung mit ihrer Antriebsvorrichtung verbunden wird. Somit kann der Granulator weiterhin in Betrieb bleiben, während das vorher benutzte und abgebaute Modulgehäuse mit der Schneidvorrichtung gereinigt wird. Auf diese Weise können die Stillstandszeiten des Granulators sehr kurz gehalten werden.

Gemäß der Erfindung ist vorgesehen, dass neben der Schneidvorrichtung auch eine von einer Antriebsvorrichtung angetriebene Fördervorrichtung vorgesehen ist, mit der der zu schneidende Materialstrang der Schneidvorrichtung zugeführt werden kann, wobei die Fördervorrichtung ebenfalls in dem Modulgehäuse aufgenommen und zusammen mit diesem als Einheit von dem Granulatorgehäuse abgebaut werden kann. Vorzugsweise ist die Fördervorrichtung über eine lösbare Kupplung mit ihrer Antriebsvorrichtung verbunden.

Für die Schneidvorrichtung und die Fördervorrichtung kann eine gemeinsame Antriebsvorrichtung vorgesehen sein, vorzugsweise besitzen die Schneidvorrichtung und die Fördervorrichtung jedoch jeweils eine eigene Antriebsvorrichtung.

In bevorzugter Ausgestaltung der Erfindung ist vorgesehen, dass alle mit dem Materialstrang in Kontakt kommenden Bauteile in oder an dem Modulgehäuse sind. Auf diese Weise ist sichergestellt, dass eventuelle Produktreste des verarbeiteten Produktes sich nur in oder an dem Modulgehäuse befinden können und zuverlässig entfernt werden, wenn das Modulgehäuse abgebaut wird.

In einer möglichen Ausgestaltung der Erfindung ist vorgesehen, dass die Fördervorrichtung ein drehangetriebenes Antriebsrad und eine Druckrolle aufweist, zwischen denen der Materialstrang transportierbar ist. Vorzugsweise ist die Druckrolle unter Federbelastung gegen das Antriebsrad gespannt, so dass eine gute Übertragung der Antriebskraft auf den Materialstrang gewährleistet ist. Dabei kann die Federbelastung der Druckrolle einstellbar und dadurch an unterschiedliche Materialien anpassbar sein.

Um eine gute Kraftübertragung zwischen der Umfangsfläche des Antriebsrades und dem Materialstrang zu gewährleisten, kann in Weiterbildung der Erfindung vorgesehen sein, dass das Antriebsrad an seiner Umfangsfläche eine Strukturierung, beispielsweise eine Rändelung aufweist.

Bei der Schneidvorrichtung kann es sich um ein drehangetriebenes Schneidrad beispielsweise mit einer senkrecht zur Längsachse des Materialstrangs verlaufenden Drehachse handeln, wobei das Schneidrad mehrere über den Umfang verteilte Schneidzähne aufweisen kann. Es ist jedoch auch möglich, dass die Schneidvorrichtung von einem linear hin und her bewegten Messer gebildet ist, das vorzugsweise vertikal oberhalb oder unterhalb des zu schneidenden Endes des Materialstrangs angeordnet ist.

Um zu vermeiden, dass Produktreste bei dem Schneiden des Materialstrangs an die Umgebung gelangen, kann in bevorzugter Ausgestaltung der Erfindung vorgesehen sein, dass die Schneidvorrichtung und/oder die Fördervorrichtung in einem Innenraum des Modulgehäuses aufgenommen sind, der mittels einer Abdeckung verschließbar ist. Bei der Abdeckung kann es sich beispielsweise um eine Tür oder Klappe handeln, die insbesondere zumindest abschnittsweise transparent ausgestaltet sein kann, damit ein Benutzer den Betrieb und die ordnungsgemäße Funktion der Fördervorrichtung und der Schneidvorrichtung betrachten und überwachen kann.

In Weiterbildung der Erfindung kann vorgesehen sein, dass die Abdeckung bzw. die von der Abdeckung abgedeckte Öffnung des Modulgehäuses auf der den Kupplungen abgewandten Seite des Modulgehäuses und somit auch dem Granulatorgehäuse abgewandt angeordnet ist. Die Fördervorrichtung und die Schneidvorrichtung sind in dem Modulgehäuse weitestgehend gekapselt und von der Umgebung abgeschlossen. Lediglich für den Einlass des Materialstrangs ist ein Durchlass geringer Größe vorgesehen und gegebenenfalls kann eine Auslassöffnung für die abgeschnittenen Teilchen, d.h. das Granulat, ausgebildet sein. Falls es notwendig sein sollte, die Abdeckung zu öffnen, ist durch deren von dem Granulatorgehäuse abgewandte Ausrichtung sichergestellt, dass eine Verschmutzung des Granulatorgehäuses und/oder der Kupplungen mit Produktresten sehr unwahrscheinlich ist.

Als Kupplung zwischen der Schneidvorrichtung bzw. der Fördervorrichtung und der jeweiligen Antriebsvorrichtung kann jede Kupplung verwendet werden, die eine gute Kraftübertragung von der Antriebsvorrichtung auf die Schneidvorrichtung bzw. Fördervorrichtung gewährleistet und sich darüber hinaus in einfacher Weise lösen lässt. In bevorzugter Ausgestaltung der Erfindung ist eine Steckkupplung verwendet. Die lösbare Kupplung der Fördervorrichtung weist somit zumindest einen und vorzugsweise zumindest zwei Eingriffsstifte auf, die jeweils in eine entsprechende Aufnahme unter vorzugsweise enger Passung eingesetzt werden können. Mittels des Eingriffsstifts bzw. der Eingriffsstifte lässt sich ein Drehmoment in einfacher Weise übertragen.

Auch die lösbare Kupplung der Schneidvorrichtung kann zumindest einen und vorzugsweise zumindest zwei Eingriffsstifte aufweisen, die jeweils in eine entsprechende Aufnahme eingeführt werden können.

Um eine exakte Positionierung des Modulgehäuses relativ zu dem Granulatorgehäuse und dadurch auch ein leichtes und exaktes Einführen der Eingriffsstifte in die jeweilige Aufnahme zu erleichtern, kann in Weiterbildung der Erfindung vorgesehen sein, dass zumindest eine der Kupplungen einen Zentrierstift aufweist, der in eine Zentrieraufnahme einführbar ist.

Weitere Einzelheiten und Merkmale der Erfindung sind aus der folgenden Beschreibung eines Ausführungsbeispiels unter Bezugnahme auf die Zeichnung ersichtlich. Es zeigen:

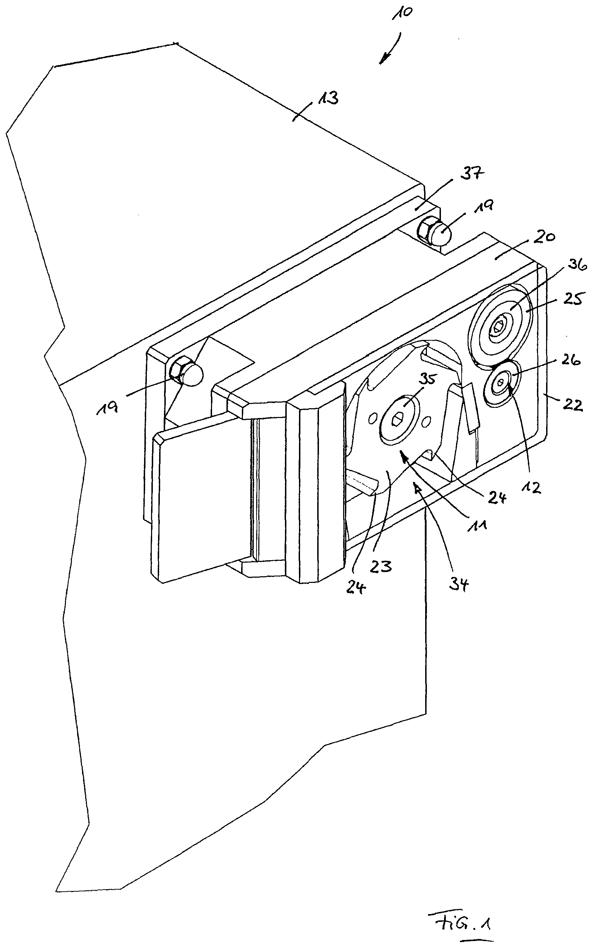

- Fig. 1: Eine ausschnittsweise perspektivische Darstellung eines Granulators mit montiertem Modulgehäuse,
- Fig. 2: eine Vorderansicht des Modulgehäuses,
- Fig. 3: eine perspektivische Rückansicht des Modulgehäuses und
- Fig. 4: eine Figur 1 entsprechende Darstellung mit abgenommenem Modulgehäuse.

Ein in den Figuren dargestellter Granulator 10 besitzt ein Granulatorgehäuse 13 und ein daran anbaubares sowie von diesem abbaubares Modulgehäuse 20. In dem Modulgehäuse 20 ist ein Innenraum 34 ausgebildet, in dem eine Schneidvorrichtung 11 angeordnet ist. Die Schneidvorrichtung 11 umfasst ein Schneidrad 23, das mehrere über den Umfang verteilt angeordnete Schneidzähne 24 besitzt. Das Schneidrad 23 sitzt auf einer Welle 35, die um eine Achse A drehbar ist.

Darüber hinaus ist in dem Modulgehäuse 20 eine Fördervorrichtung 12 angeordnet. Die Fördervorrichtung 12 umfasst ein Antriebsrad 26, das auf seiner Umfangsfläche eine Strukturierung 30 in Form einer Rändelung besitzt und auf einer Welle 36 sitzt, die um eine Achse B drehbar gelagert ist. Im dargestellten Ausführungsbeispiel verlaufen die Achsen A und B parallel zueinander.

Ferner umfasst die Fördervorrichtung 12 eine drehbar gelagerte Druckrolle 25, die mittels einer nur schematisch durch einen Pfeil F angedeutete Federkraft gegen das Antriebsrad 26 gespannt ist.

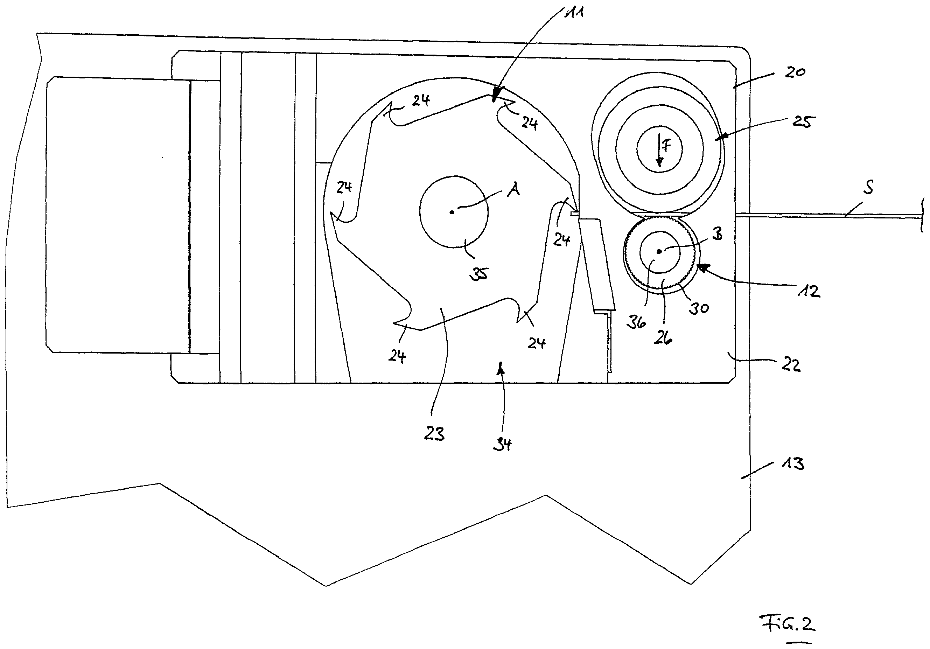

Wie Figur 2 zeigt, kann ein Materialstrang S zwischen das Antriebsrad 26 und die Druckrolle 25 eingeführt und zwischen diesen beiden Bauteilen eingespannt werden. Wenn das Antriebsrad 26 gedreht wird, wird dadurch der Materialstrang S in seine Längsrichtung gefördert und der Schneidvorrichtung 11 zugeführt, die am vorderen Ende des Materialstrangs S ein Stück vom Materialstrang S abschneidet und so diesen granuliert.

Der Innenraum 34 des Modulgehäuses 20 ist mittels einer Tür oder klappenartigen Abdeckung 22 verschließbar, die im dargestellten Ausführungsbeispiel transparent ist.

Auf der der Abdeckung 22 abgewandten Rückseite des Modulgehäuses 20 besitzt dieses eine Rückplatte 37, die in ihren Eckbereichen mit Bohrungen 21 versehen ist, in die entsprechend angeordnete, am Granulatorgehäuse 13 befestigte Haltestifte 18 eingeführt werden können.

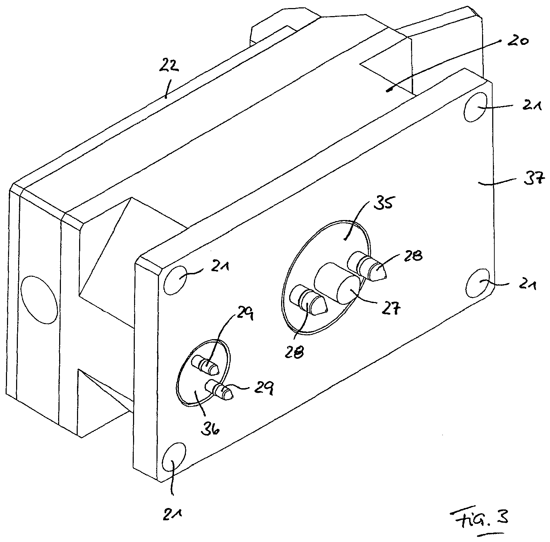

Wie Figur 3 zeigt, durchdringt die Welle 35 der Schneidvorrichtung 11 die Rückplatte 37 und endet auf der Rückseite im wesentlichen bündig mit dieser. An dem rückwertigen Ende der Welle 35 sind ein zentraler Zentrierstift 27 und zwei seitlich dazu versetzte Antriebsstifte 28 ausgebildet, die in Axialrichtung der Welle 35 hervorstehen.

Auch die Welle 36 der Fördervorrichtung 12 duchdringt die Rückplatte 37 und endet rückseitig im wesentlichen bündig mit dieser. An der Welle 36 sind zwei in Axialrichtung der Welle 36 nach hinten hervorstehende Antriebsstifte 29 angeformt.

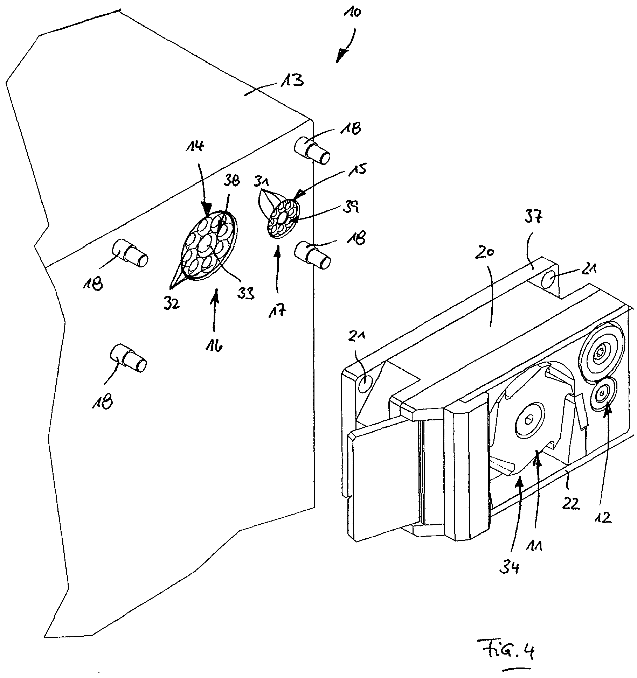

Gemäß Figur 4 ist in dem Granulatorgehäuse 13 eine Antriebsvorrichtung 14 für die Schneidvorrichtung 11 angeordnet, wobei von der Antriebsvorrichtung 14 nur das Ende einer Antriebswelle 38 dargestellt ist, die auf ihrer äußeren Stirnseite eine zentrale Zentrieraufnahme 33 sowie mehrere über den Umfang verteilt angeordnete lochartige Aufnahmen 32 besitzt. Die Antriebswelle 38 bildet im Zusammenwirken mit dem Zentrierstift 27 und den Antriebsstiften 28 der Welle 35 der Schneidvorrichtung 11 eine lösbare Kupplung 16, mit der ein Drehmoment übertragen werden kann.

Darüber hinaus ist in dem Granulatorgehäuse 13 eine Antriebsvorrichtung 15 für die Fördervorrichtung 12 angeordnet, von der nur das stirnseitige Ende einer Antriebswelle 39 zu sehen ist, an deren stirnseitigem Ende mehrere über den Umfang verteilt angeordnete lochförmige Aufnahmen 31 ausgebildet sind, die im Zusammenwirken mit den Antriebsstiften 29 der Welle 36 der Fördervorrichtung 12 eine lösbare Kupplung 17 bilden, mit der ein Drehmoment übertragen werden kann.

Zur Montage des Modulgehäuses 20 wird dieses mit seiner Rückplatte 37 so auf die Haltestifte 18 des Granulatorgehäuses 13 aufgesetzt, dass die Haltestifte 18 die Bohrungen 21 der Rückplatte 37 des Modulgehäuses 20 durchgreifen. Gleichzeitig wird der Zentrierstift 27 der Welle 35 in die Zentrieraufnahme 33 der Antriebswelle 38 eingeführt und die Antriebsstifte 28 der Welle 35 werden in zwei diametral gegenüberliegende Aufnahmen 32 der Antriebswelle 38 eingesetzt. Damit steht die Antriebswelle 38 mit der Welle 35 der Schneidvorrichtung 11 in Wirkverbindung, so dass ein Drehmoment übertragen werden kann.

Gleichzeitig werden die Antriebsstifte 29 der Welle 36 der Fördervorrichtung 12 in zwei diametral gegenüberliegende Aufnahmen 31 der Antriebswelle 39 eingeführt, so dass auch die Kupplung 17 zwischen der Antriebswelle 39 und der Welle 36 der Fördervorrichtung 12 zur Übertragung eines Drehmomentes gekuppelt ist. Wenn das Modulgehäuse 20 auf dem Granulatorgehäuse 13 korrekt positioniert ist, werden auf die hervorstehenden Haltestifte 18 Muttern 19 aufgeschraubt, um das Modulgehäuse 20 zu fixieren.

Zum Austausch bzw. Abbau des Modulgehäuses 20 werden die Muttern 19 gelöst und das Modulgehäuse 20 wird zusammen mit allen im Modulgehäuse 20 angeordneten Anbauteilen, insbesondere der Schneidvorrichtung 11 und der Fördervorrichtung 12 als Einheit von den Haltestiften 18 abgenommen. Dabei werden auch die Kupplung 16 zwischen der Antriebsvorrichtung 14 und der Schneidvorrichtung 11 sowie die Kupplung 17 zwischen der Antriebsvorrichtung 15 und der Fördervorrichtung 12 gelöst. Dieser Zustand ist in Figur 4 dargestellt. Das bisher benutzte Modulgehäuse kann dann zu einem externen Reinigungsplatz gebracht werden, während gleichzeitig ein neues Modulgehäuse an das Granulatorgehäuse in genannter Weise angebaut wird, so dass ein anderer Materialstrang verarbeitet werden kann.

## Patentansprüche

1. Granulator (10) mit einer von einer Antriebsvorrichtung (14) angetriebenen Schneidvorrichtung (11), wobei die Antriebsvorrichtung (14) in einem Granulatorgehäuse (13) aufgenommen und die Schneidvorrichtung (11) in einem Modulgehäuse (20) aufgenommen ist, das in lösbarer Weise mit dem Granulatorgehäuse (13) verbunden und von diesem abnehmbar ist, wobei die Schneidvorrichtung (11) über eine lösbare Kupplung (16) mit der Antriebsvorrichtung (14) verbunden ist, wobei die Schneidvorrichtung (11) zusammen mit dem Modulgehäuse (20) als Einheit von dem Granulatorgehäuse (13) abnehmbar ist und wobei eine von einer Antriebsvorrichtung (15) angetriebene Fördervorrichtung (12) vorgesehen ist, mit der ein Materialstrang (S) der Schneidvorrichtung (11) zuführbar ist, **dadurch gekennzeichnet, dass** die Fördervorrichtung (12) in dem Modulgehäuse (20) aufgenommen und zusammen mit dem Modulgehäuse (20) als Einheit von dem Granulatorgehäuse (13) abnehmbar ist.

2. Granulator nach Anspruch 1, **dadurch gekennzeichnet, dass** die Fördervorrichtung (12) über eine lösbare Kupplung (17) mit der Antriebsvorrichtung (15) verbunden ist.

3. Granulator nach einem der Ansprüche 1 oder 2, **dadurch gekennzeichnet, dass** alle mit dem Materialstrang (S) in Kontakt kommenden Bauteile an oder in dem Modulgehäuse (20) angeordnet sind.

4. Granulator nach einem der Ansprüche 1 bis 3, **dadurch gekennzeichnet, dass** die Fördervorrichtung (12) ein drehangetriebenes Antriebsrad (26) und eine Druckrolle (25) aufweist, zwischen denen der Materialstrang (S) transportierbar ist.

5. Granulator nach Anspruch 4, **dadurch gekennzeichnet, dass** die Druckrolle (25) unter Federbelastung gegen das Antriebsrad (26) gespannt ist.

6. Granulator nach Anspruch 5, **dadurch gekennzeichnet, dass** die Federbelastung der Druckrolle (25) einstellbar ist.

7. Granulator nach einem der Ansprüche 4 bis 6, **dadurch gekennzeichnet, dass** das Antriebsrad (26) an seiner Umfangsfläche eine Strukturierung (30) aufweist.

8. Granulator nach einem der Ansprüche 1 bis 7, **dadurch gekennzeichnet, dass** die Schneidvorrichtung (11) ein drehangetriebenes Schneidrad (23) mit mehreren über den Umfang verteilten Schneidzähnen (24) aufweist.

9. Granulator nach einem der Ansprüche 1 bis 8, **dadurch gekennzeichnet, dass** die Schneidvorrichtung (11) und/oder die Fördervorrichtung (12) in einem Innenraum (34) des Modulgehäuses (20) aufgenommen sind, der mittels einer Abdeckung (22) verschließbar ist.

10. Granulator nach Anspruch 9, **dadurch gekennzeichnet, dass** die Abdeckung (22) auf der den Kupplungen (16, 17) abgewandten Seite des Modulgehäuses (20) angeordnet ist.

11. Granulator nach einem der Ansprüche 1 bis 10, **dadurch gekennzeichnet, dass** die lösbare Kupplung (16) der Schneidvorrichtung (11) zumindest einen Eingriffsstift (28) aufweist, der in eine Aufnahme (32) der Kupplung (16) einführbar ist.

12. Granulator nach einem der Ansprüche 2 bis 11, **dadurch gekennzeichnet, dass** die lösbare Kupplung (17) der Fördervorrichtung (12) zumindest einen Eingriffsstift (29) aufweist, der in eine Aufnahme (31) der Kupplung (17) einführbar ist.

13. Granulator nach einem der Ansprüche 2 bis 12, **dadurch gekennzeichnet, dass** zumindest eine der lösbaren Kupplungen (16, 17) einen Zentrierstift (27) aufweist, der in eine Zentrieraufnahme (33) einführbar ist.

## Claims

1. A granulator (10) having a cutting device (11) driven by a drive device (14), wherein the drive device (14) is accommodated in a granulator housing (13) and the cutting device (11) is accommodated in a module housing (20) which is detachably connected to the granulator housing (13) and is removable therefrom, wherein the cutting device (11) is connected to the drive device (14) via a releasable coupling (16), wherein the cutting device (11) is removable together with the module housing (20), as a unit, from the granulator housing (13) and wherein a conveying device (12) is provided which is driven by a drive device (15) and with which a material strand (S) can be fed to the cutting device (11), **characterized in that** the conveying device (12) is accommodated in the module housing (20) and is removable together with the module housing (20), as a unit, from the granulator housing (13).

2. The granulator as claimed in claim 1, **characterized in that** the conveying device (12) is connected to the drive device (15) via a releasable coupling (17).

3. The granulator as claimed in one of claims 1 or 2, **characterized in that** all components which come into contact with the material strand (S) are disposed on or in the module housing (20).

4. The granulator as claimed in one of claims 1 to 3, **characterized in that** the conveying device (12) has a rotationally driven drive wheel (26) and a pressure roller (25), between which the material strand (S) is transportable.

5. The granulator as claimed in claim 4, **characterized in that** the pressure roller (25) is tensioned against the drive wheel (26) under spring load.

6. The granulator as claimed in claim 5, **characterized in that** the spring load on the pressure roller (25) is adjustable.

7. The granulator as claimed in one of claims 4 to 6, **characterized in that** the drive wheel (26) has a structuring (30) on its peripheral surface.

8. The granulator as claimed in one of claims 1 to 7, **characterized in that** the cutting device (11) has a rotationally driven cutting wheel (23) having a plurality of cutting teeth (24) distributed over the periphery.

9. The granulator as claimed in one of claims 1 to 8, **characterized in that** the cutting device (11) and/or the conveying device (12) are accommodated in an interior (34) of the module housing (20), which interior is closable by means of a cover (22).

10. The granulator as claimed in claim 9, **characterized in that** the cover (22) is disposed on that side of the module housing (20) which is facing away from the couplings (16, 17).

11. The granulator as claimed in one of claims 1 to 10, **characterized in that** the releasable coupling (16) of the cutting device (11) has at least one engaging pin (28), which can be introduced into a receptacle (32) of the coupling (16).

12. The granulator as claimed in one of claims 1 to 11, **characterized in that** the releasable coupling (17) of the conveying device (12) has at least one engaging pin (29), which can be introduced into a receptacle (31) of the coupling (17).

13. The granulator as claimed in one of claims 2 to 12, **characterized in that** at least one of the releasable couplings (16, 17) has a centering pin (27), which can be introduced into a centering receptacle (33).

## Revendications

1. Granulateur (10) avec un dispositif de coupe (11) entraîné par un dispositif d'entraînement (14), le dispositif d'entraînement (14) étant logé dans un carter de granulateur (13) et le dispositif de coupe (11) étant logé dans un carter modulaire (20) relié de façon amovible au carter de granulateur (13) et pouvant être séparé de lui, le dispositif de coupe (11) étant relié au dispositif d'entraînement (14) via un embrayage (16) amovible, le dispositif de coupe (11) pouvant être séparé du carter de granulateur (13) conjointement avec le carter modulaire (20) sous la forme d'une unité et un dispositif de transport (12) entraîné par un dispositif d'entraînement (15) étant prévu à l'aide duquel une chaîne de matériau (S) peut être amenée au dispositif de coupe (11), **caractérisé en ce que** le dispositif de transport (12) est logé dans le carter modulaire (20) et peut être séparé du carter de granulateur (13) conjointement avec le carter modulaire (20), sous la forme d'une unité.

2. Granulateur selon la revendication 1, **caractérisé en ce que** le dispositif de transport (12) est relié au dispositif d'entraînement (15) via un embrayage (17) amovible.

3. Granulateur selon l'une quelconque des revendications 1 ou 2, **caractérisé en ce que** tous les composants entrant en contact avec la chaîne de matériau (S) sont disposés en contact avec le carter modulaire (20) ou dans celui-ci.

4. Granulateur selon l'une quelconque des revendications 1 à 3, **caractérisé en ce que** le dispositif de transport (12) comporte une roue motrice (26) entraînée en rotation et un rouleau compresseur (25) entre lesquels la chaîne de matériau (S) peut être transportée.

5. Granulateur selon la revendication 4, **caractérisé en ce que** le rouleau compresseur (25) est serré contre la roue motrice (26) par le biais d'une sollicitation par ressort.

6. Granulateur selon la revendication 5, **caractérisé en ce que** la sollicitation par ressort du rouleau compresseur (25) est réglable.

7. Granulateur selon l'une quelconque des revendications 4 à 6, **caractérisé en ce que** la roue motrice (26) présente une structuration (30) au niveau de sa surface périphérique.

8. Granulateur selon l'une quelconque des revendications 1 à 7, **caractérisé en ce que** le dispositif de coupe (11) comporte une roue tranchante (23) entraînée en rotation avec plusieurs dents tranchantes (24) réparties sur toute sa périphérie.

9. Granulateur selon l'une quelconque des revendications 1 à 8, **caractérisé en ce que** le dispositif de coupe (11) et/ou le dispositif de transport (12) peuvent être logés dans un espace intérieur (34) du carter modulaire (20) pouvant être refermé au moyen d'un couvercle (22).

10. Granulateur selon la revendication 9, **caractérisé en ce que** le couvercle (22) est disposé sur le côté du carter modulaire (20) opposé aux embrayages (16, 17).

11. Granulateur selon l'une quelconque des revendications 1 à 10, **caractérisé en ce que** l'embrayage (16) amovible du dispositif de coupe (11) comporte au moins une pointe d'engrènement (28) pouvant être introduite dans un logement (32) de l'embrayage (16).

12. Granulateur selon l'une quelconque des revendications 2 à 11, **caractérisé en ce que** l'embrayage (17) amovible du dispositif de transport (12) comporte au moins une pointe d'engrènement (29) pouvant être introduite dans un logement (31) de l'embrayage (17).

13. Granulateur selon l'une quelconque des revendications 2 à 12, **caractérisé en ce qu'**au moins un des embrayages (16, 17) amovibles comporte une tige de centrage (27) pouvant être introduite dans un logement de centrage (33).
